# EUROPÄISCHE PATENTSCHRIFT

(11) **EP 4 345 423 B1**
(45) Veröffentlichungstag und Bekanntmachung des Hinweises auf die Patenterteilung: **27.08.2025**
(21) Anmeldenummer: 23189468.4
(22) Anmeldetag: 03.08.2023
(51) Int. Cl.: G01D 11/30, G01D 11/24

(54) **SENSOREINHEIT**
SENSOR UNIT
UNITÉ DE CAPTEUR

(30) Priorität: 29.09.2022 DE 202022105508 U
(43) Veröffentlichungstag der Anmeldung: 03.04.2024
(73) Patentinhaber: elobau GmbH & Co. KG, 88299 Leutkirch im Allgäu (DE)
(72) Erfinder: LIEB, Andreas, 88410 Bad Wurzach (DE); KELLER, Wolfgang, 87549 Rettenberg (DE)
(74) Vertreter: VKK Patentanwälte PartG mbB

(56) Entgegenhaltungen:
- EP-A1- 2 868 314
- DE-A1- 102013 222 594
- DE-A1- 102018 102 905
- DE-A1- 102020 106 829
- DE-U1- 202011 051 244

## Beschreibung

Die vorliegende Erfindung betrifft eine Sensoreinheit zur durchsetzenden Verbindung mit einer Anlagenwandung einer hygienekritischen technischen Anlage aufweisend ein im Benutzungsfall innerhalb eines Hygienebereichs der technischen Anlage befindliches Durchtrittende, eine Hygieneabdeckung für das Durchtrittende sowie eine Verbindungseinrichtung zur kraftschlüssigen Verbindung zwischen Hygieneabdeckung und Anlagenwandung.

In hygienekritischen Bereichen wie der Lebensmittel- oder Pharmazieproduktion müssen die mit den produzierten Produkten in Kontakt tretenden Komponenten eine zuverlässige Reinigung ermöglichen, sowie ein möglichst geringes Verschmutzungspotential aufweisen. In diesen hygienekritischen Bereichen befinden sich häufig bewegliche Teile, wie beispielsweise Schneidwerkzeuge zum Aufbereiten und Zerteilen von Lebensmitteln oder Transportkomponenten, wie Greifarme zum Umsetzen der Produkte. Zur Verminderung der Verletzungsgefahr eines Bedieners sind diese Bereiche häufig mit Lichtschranken oder Gehäusen, bzw. Zugangsklappen versehen, deren geschlossener Zustand mittels Sicherhalts- bzw. Abstandssensoreinheiten erkannt wird. Diese Sensoreinheiten werden auch zur Begrenzung der Bewegung von Transportkomponenten genutzt.

Aus dem Stand der Technik sind derartige Sensoreinheiten bekannt, die mittels einer geschlossenen Wandung vom hygienekritischen Bereich abgetrennt verbaut sind, da diese Sensoreinheiten den geforderten Hygienevorschriften nicht entsprechen. Dieser Blindverbau erschwert die Installation und Ausrichtung zwischen Receiver und Emitter einer solchen Sensoreinheit. Auch können nicht alle Sensoreinheiten blindverbaut werden.

Aus dem Stand der Technik sind darüber hinaus Sensoreinheiten bekannt, die den jeweiligen Hygienevorschriften entsprechen und somit innerhalb eines entsprechenden Hygienebereichs verbaut werden dürfen. Allerdings sind derartige Sensoren komplex und kostenintensiv in ihrer Herstellung. Zudem ist oftmals eine aufwendige Reinigung notwendig, was das Risiko einer Beschädigung der Sensoreinheiten erhöht.

Aus der DE 20 2011 051244 U1 ist ein Sensor, umfassend ein Gehäuse und ein Anschlusskabel bekannt.

Die vorliegende Erfindung stellt sich daher die Aufgabe, eine einfache, kostengünstige und modulierbare Sensoreinheit für eine hygienekritische technische Anlage vorzuschlagen.

Diese Aufgabe wird gelöst durch eine Sensoreinheit zur durchsetzenden Verbindung mit einer Anlagenwandung einer hygienekritischen technischen Anlage aufweisend ein im Benutzungsfall innerhalb eines Hygienebereichs der technischen Anlage befindliches Durchtrittende, weiter aufweisend eine Hygieneabdeckung für das Durchtrittende sowie eine Verbindungseinrichtung zur kraftschlüssigen Verbindung zwischen Hygieneabdeckung und Anlagenwandung, wobei die Verbindungseinrichtung ein Außengewinde an der Sensoreinheit, wenigstens eine Überwurfmutter und ein Innengewinde an einem Abdeckungsinnenraum der Hygieneabdeckung umfasst, wobei der Abdeckungsinnenraum durch eine flächengeschlossene, kreisrunde Stirnwandung und eine, sich davon axial erstreckende, geschlossene Umfangswandung ausgebildet ist, wobei die Umfangswandung an ihrem von der Stirnwandung axial gegenüberliegenden Ende eine Verbindungsfläche mit einer Axialdichtung zur Anlage an die Anlagenwandung aufweist.

Die Sensoreinheit ist insbesondere ein handelsüblicher Sicherheitssensor bzw. Abstandssensor ohne besondere, für den Einsatz in einem Hygienebereich geforderte Eigenschaften. Mit anderen Worten ermöglicht die Erfindung den Einsatz von "normalen" Sensoreinheiten auch in diesen Hygienebereichen. Die sensorische Erfassung der Messdaten erfolgt erfindungsgemäß magnetisch oder induktiv. Derartige Sensoreinheiten haben ein im Wesentlichen zylinderförmiges Sensorgehäuse mit einem Durchtrittende und einem Außengewinde. Die für die Erfindung besonders vorteilhaft einsetzbaren Gewinde sind M8-, M12- oder M30-Gewinde. Jedoch sind auch andere Gewindegrößen und -typen erfindungsgemäß, insbesondere Feingewinde. Letztere ermöglichen eine gleichwertig kraftschlüssige Verbindung in einem kleineren Bauraum als Standardgewinde. Ein solches Feingewinde ist dabei erfindungsgemäß mindestens im Bereich des Durchtrittendes angeordnet. Die Hygieneabdeckung ist dabei so ausgelegt, dass sie im Benutzungsfall mindestens über zwei, bevorzugt über drei Gewindegänge mit der Sensoreinheit verbunden ist.

Das Durchtrittende bildet maximal ein Anteil von 50 %, bevorzugt maximal 30 %, besonders bevorzugt maximal 15 % der axialen Erstreckung der Sensoreinheit, um so den Bauraum innerhalb des Hygienebereichs möglichst gering zu halten.

Eine Außenfläche der erfindungsgemäßen Hygieneabdeckung entspricht den geforderten Standards in einem Hygienebereich und verhindert zusätzlich die direkte Verschmutzung der Sensoreinheit.

Die erfindungsgemäße Hygieneabdeckung der handelsüblichen Sensoreinheit ermöglicht aufgrund der Gewindeverbindung eine breite Verwendungsmöglichkeit der Sensoreinheit unabhängig von deren Positionierung innerhalb der technischen Anlagen, was wiederum Kosten reduziert und die Einsatzmöglichkeiten erhöht. Die axiale Position der erfindungsgemäßen Sensoreinheit mit Hygienekappe in Bezug auf die durchsetzte Wandung der hygienekritischen technischen Anlage wird durch die erste Überwurfmutter erreicht, die ein zu tiefes Eindringen des Durchtrittendes verhindert und die korrekte Wiederanbringung nach einer Reinigung sicherstellt. Besonders geschultes Fachpersonal wird für die Reinigung daher nicht benötigt.

Die kraftschlüssige Verbindung zwischen Hygieneabdeckung und Anlagenwandung erfolgt über eine Klemmung der Anlagenwandung zwischen der ersten Überwurfmutter und der Hygieneabdeckung, wobei diese jeweils kraftschlüssig mit der Sensoreinheit verbunden sind. Die Anlagenwandung weist eine Durchgangsöffnung in Form einer kreisrunden - der geometrischen Form der Sensoreinheit angepassten - Bohrung auf. Auch eine andere Form der Durchgangsöffnung ist erfinderisch, so lange deren kleinster Durchmesser/ Breite größer dem Außendurchmesser der Sensoreinheit und kleiner dem Außendurchmesser der Überwurfmutter und der Hygieneabdeckung ist.

Die Stirnwandung und die Umfangswandung bilden im Wesentlichen einen einseitig stirnseitig geöffneten Zylinder. Die Axialdichtung wird an die Anlagenwandung angepresst, sodass zwischen Hygieneabdeckung und Anlagenwandung eine Dichtung mit einer Staub- und Wasserbeständigkeit sichergestellt ist. Die Axialdichtung ist erfindungsgemäß als Dichtring, Flachdichtung oder als Labyrinthdichtung ausgebildet.

In Ausgestaltung der Erfindung ist vorgesehen, dass die Verbindungseinrichtung eine zweite Überwurfmutter aufweist und die Hygieneabdeckung einen sich axial erstreckenden Abdeckungsabschnitt mit einem vergrößerten Radius zur Aufnahme der zweiten Überwurfmutter in dem Abdeckungsinnenraum der Hygieneabdeckung aufweist. Mit Vorteil ist dadurch eine feste Positionierung der Sensoreinheit an der Anlagenwandung auch bei Abnahme der Hygieneabdeckung für Reinigungszwecke sichergestellt. Nach der Reinigung wird die Hygieneabdeckung wieder kraftschlüssig mit der Anlagenwandung verbunden, es bedarf keiner erneuten Positionierung der Sensoreinheit. Das Durchtrittende ist so stufenlos axial positionierbar. Der Abdeckungsabschnitt weist kein Innengewinde und einen Durchmesser größer gleich dem Maximaldurchmesser der Überwurfmutter auf. Die zweite Überwurfmutter weist eine solche Erstreckung in axialer Richtung auf, dass eine sichere Montage an der Sensoreinheit über mindestens drei Gewindegänge gewährleistet ist.

Weiter ist die axiale Erstreckung des Abdeckungsinnenraums in vorteilhafter Weise größer als diejenige des Durchtrittendes. Sofern die Verbindungseinrichtung die zweite Überwurfmutter aufweist, ist ein Luftspalt sowohl zwischen Durchtrittende und dem stirnwandungsseitigen Abdeckungsinnenraum, als auch zwischen einer Stirnfläche der zweiten Überwurfmutter und des Abdeckungsabschnitts gebildet, was eine kraftschlüssige und dichtende Verbindung zwischen Anlagenwandung und Hygieneabdeckung gewährleistet. Eine stufenlose axiale Positionierung des Durchtrittendes in dem Hygienebereich ist bis zu dem durch die Hygieneabdeckung beschränkten Maß möglich. Der Luftspalt zwischen Durchtrittsende und dem stirnflächenseitigen Abdeckungsinnenraum verhindert vorteilhaft die direkte Übertragung von äußeren Kräften auf die Sensoreinheit insbesondere durch das Anschlagen eines Emitters oder einer anderen Komponente der technischen Anlage, wodurch die Sensoreinheit geschützt und deren Lebensdauer verlängert ist.

In Weiterbildung der Erfindung ist vorgesehen, dass die Stirnwandung eine Dicke von maximal 5 mm, bevorzugt von maximal 3 mm, besonders bevorzugt von maximal 1 mm aufweist. Eine solche geringe Dicke der Stirnwandung reduziert den erforderlichen Bauraum und dämpft die Reichweite der Sensoreinheit möglichst wenig.

In Ausgestaltung der Erfindung ist vorgesehen, dass eine durch die Stirnwandung und Umfangswandung gebildete Außenfläche keine scharfen Kanten, insbesondere ausschließlich Radien aufweist und/oder die Außenfläche eine radial mindestens einstufig ausgebildete Zylinderform und/oder eine mindestens teilweise ausgebildete Schlüsselfläche aufweist. Als scharfe Kanten sind insbesondere Kanten mit einem spitzen Winkel, also von bis zu 90° zwischen aufeinandertreffenden Flächen definiert. Die Radien betragen mindestens 0,5 mm, bevorzugt mindestens 1 mm, besonders bevorzugt mindestens 2 mm. Die Zylinderform ist eine möglichst platzsparende Konstruktion der Hygieneabdeckung. Die Außenfläche ist an die Kontur des Abdeckungsinnenraums angepasst. Neben einer teilweise ausgebildeten Schlüsselfläche sind auch zwei, drei oder eine Vielzahl an Schlüsselflächen ausbildbar, wobei die entsprechenden Schlüsselflächen gleichmäßig in einem durch die Stirnfläche definierten Kreisbogen angeordnet sind. Die Schlüsselflächen sind bevorzugt in einem 90° Winkel zu der Stirnfläche entlang der Umfangsfläche angeordnet und ermöglichen den Beschädigungsfreien Ansatz eines Maulschlüssels bei der Montage, bzw. Demontage. Die Schlüsselflächen weisen eine axiale Höhe von maximal 15 mm, bevorzugt maximal 10 mm, besonders bevorzugt maximal 5 mm auf. Die Hygieneabdeckung wird mit größer 5 Nm, bevorzugt größer 7 Nm, besonders bevorzugt größer 10 Nm, und insbesondere von Hand angezogen.

In Ausgestaltung der Erfindung ist vorgesehen, dass die Außenhülle aus einem hochlegierten Stahl, insbesondere einem Edelstahl, gefertigt ist. Hochlegierte Stähle sind besonders korrosionsbeständig, weisen eine glatte Oberfläche und eine hohe Festigkeit auf, so dass auch aggressive Reinigungsmittel einsetzbar sind, zumal materialbedingt bereits nur geringe Anhaftungen auf der Oberfläche möglich sind. Die hohe Festigkeit des Materials ermöglicht mit Vorteil eine dünne Außenhülle der Hygieneabdeckung, die die Reichweite der Sensoreinheit im Wesentlichen nicht minimiert

Nachfolgend ist die Erfindung anhand mehrerer Ausführungsbeispiele mittels der Figuren näher beschrieben, wobei
- **Fig. 1**: eine erste Schnittansicht der Sensoreinheit an einer Anlagenwandung,
- **Fig. 2**: eine zweite Schnittansicht der Sensoreinheit an einer Anlagenwandung und
- **Fig. 3**: eine perspektivische Explosionsansicht der Sensoreinheit zeigen.

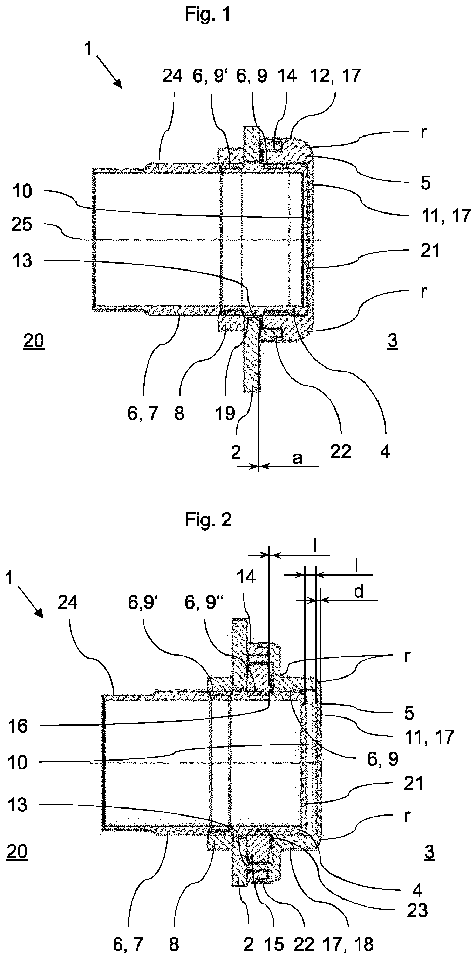

**Fig. 1** zeigt eine erste Schnittansicht der Sensoreinheit 1 mit einem Sensorgehäuse 24 an einer Anlagenwandung 2, wobei die Anlagenwandung 2 aus einem Stahlblech, insbesondere einem Edelstahlblech gebildet und aus Darstellungsgründen verkürzt dargestellt ist. Sie erstreckt sich senkrecht zur Sensoreinheitsachse 25 in beide Richtungen weiter und trennt einen Hygienebereich 3 von einem Installationsbereich 20. Die Anlagenwandung 2 kann auf ihrer Hygienebereichsseite eine Beschichtung aufweisen. Die Anlagenwandung 2 weist eine kreisförmige Durchgangsöffnung 19 auf, die vom Sensorgehäuse 24 durchsetzt ist, wobei sich Sensorgehäuse 24 und Anlagenwandung 2 nicht berühren. Das Sensorgehäuse 24 weist insbesondere vollumfänglich ein Außengewinde 7 auf, welches sowohl auf dem Durchtrittsende 4, als auch in einem Installationsbereich 20 und innerhalb der Durchgangsöffnung 19 durchgehend ausgebildet ist. In dem Installationsbereich 20 ist eine erste Überwurfmutter 8 auf dem Sensorgehäuse 24 aufgeschraubt, welche die axiale Erstreckung des Durchtrittendes 4 in den Hygienebereich 3 begrenzt. In diesem ist die erfindungsgemäße Hygieneabdeckung 5 auf Block auf das Durchtrittende 4 aufgeschraubt und berührt somit mit ihrem stirnwandungsseitigen Abdeckungsinnenraum 10 die Stirnfläche 21 des Sensorgehäuses 24. Die direkte Anlage der Hygieneabdeckung 5 an der Stirnfläche 21 bewirkt einen geringen Schaltabstand und einen geringen Bauraum. Sensorgehäuse 24 und Hygieneabdeckung 5 sind über eine Gewindeverbindung 7, 9 kraftschlüssig miteinander verbunden, wobei die Hygieneabdeckung 5 ein entsprechend zu dem Außengewinde 7 des Sensorgehäuses 24 passendes Innengewinde 9 in ihrem Abdeckungsinnenraum 10 aufweist. An einer, einer Stirnwandung 11 axial gegenüberliegenden, Verbindungsfläche 13 ist eine Axialdichtung 14 angeordnet, welche über eine Dichtungsnase 22 formschlüssig an der Hygieneabdeckung 5 befestigt ist. Von der Stirnwandung 11 erstreckt sich eine Umfangswandung 12, welche zusammen eine Außenhülle 17 bilden. Die Dichtungsnase 22 ist als umfänglich geschlossener Dichtungssteg oder als mindestens eine Erhöhung ausgebildet, wobei bei mehreren, als Erhöhungen ausgebildeten, Dichtungsnasen 22 diese vorteilhaft radial gleichmäßig an der Hygieneabdeckung 5 verteilt angeordnet sind. Die Axialdichtung 14 liegt an der Anlagenwandung 2 an und bildet eine kraftschlüssige dichte Verbindung mit dieser. Zwischen Verbindungsfläche 13 und Anlagenwandung 2 ist ein Abstand a ausgebildet, sodass die durch die Gewindeverbindung aufgebrachte Klemmkraft ausschließlich über die Axialdichtung 14 übertragen wird. Es ist ebenfalls vorteilhaft, dass sich auch Anlagenwandung 2 und Verbindungsfläche 13 in einem Nutzungsfall berühren, also a=0 mm ist, um einen Anschlag für eine maximale Pressung der Axialdichtung 14 zu erzeugen und die Axialdichtung 14 dadurch vor Beschädigungen zu schützen. Die Außenfläche 17 weist keine scharfen Kanten, sondern lediglich gerade Flächen und Radien r auf, um eine möglichst leicht zu reinigende Fläche zu schaffen. Eine Verbindungseinrichtung 6 ist gebildet aus dem Außengewinde 7, der ersten Überwurfmutter 8 mit einem Innengewinde 9' sowie dem Innengewinde 9.

**Fig. 2** zeigt eine zweite Schnittansicht der Sensoreinheit 1 an einer Anlagenwandung 2, wobei hier zusätzlich zu den in **Fig. 1** dargestellten Komponenten eine zweite Überwurfmutter 15 im Abdeckungsinnraum 10 an dem Sensorgehäuse 24 angeordnet ist, wobei ein Innengewinde 9" der zweiten Überwurfmutter 15 Teil der Verbindungseinrichtung 6 ist. Die erste Überwurfmutter 8, deren Innengewinde 9' ebenfalls Teil der Verbindungseinrichtung 6 ist, liegt im Installationsbereich 20 an der Anlagenwandung 2 an und begrenzt durch die kraftschlüssige Verbindung mit dem Außengewinde 7 des Sensorgehäuses 24 die axiale Erstreckung des Durchtrittendes 4. Weiter zur Verbindungseinrichtung 6 gehört das Innengewinde 9 der Hygieneabdeckung 5. Die zweite Überwurfmutter 15 liegt im Hygienebereich 3 an der Anlagenwandung 2 an und ist ebenso kraftschlüssig mit dem Sensorgehäuse 24 verbunden. Dieses ist somit über die beiden Überwurfmuttern 8, 15 an der Anlagenwandung 2 radial und axial fixiert. Sowohl zwischen stirnwandungsseitigem Abdeckungsinnenraum 10 und der Stirnfläche 21, als auch zwischen einer, der an der Anlagenwandung 2 gegenüberliegenden, Mutterstirnfläche 23 der zweiten Überwurfmutter 15 und einem Abdeckungsabschnitts 16 des Abdeckungsinnenraums 10 ist jeweils ein Luftspalt I ausgebildet, sodass die durch die Verbindungseinrichtung 6 erzeugte Spannkraft zwischen Sensorgehäuse 24 und Hygieneabdeckung 5 ausschließlich im Bereich der Verbindungsfläche 13 und der Axialdichtung 14 zu der Anlagenwandung 2 wirkt. Auch in dieser Ausführungsform ist die Axialdichtung 14 über eine Dichtungsnase 22 formschlüssig an der Hygieneabdeckung 5 fixiert. Die Außenfläche 17 der Hygieneabdeckung 5 weist eine Schlüsselfläche 18 auf, wobei diese durch Radien r und unscharfe Kanten, also Kanten mit einem mindestens stumpfen Winkel begrenzt ist. Die Ausbildung von einer Schlüsselfläche 18 erleichtert die De- und Montage der Hygieneabdeckung 5. Der Abdeckungsinnenraum 10 ist derart ausgebildet, dass die zweite Überwurfmutter 15 in dem Abdeckungsabschnitt 16 in ihm aufgenommen ist, wobei der maximale Außendurchmesser der zweiten Überwurfmutter 15 kleiner gleich dem Innendurchmesser des Abdeckungsabschnitt 16 ist. Eine Dicke d der Stirnwandung 11 ist bevorzugt möglichst klein, sodass der Bauraum sowie die Dämpfung der Signale der Sensoreinheit gering sind.

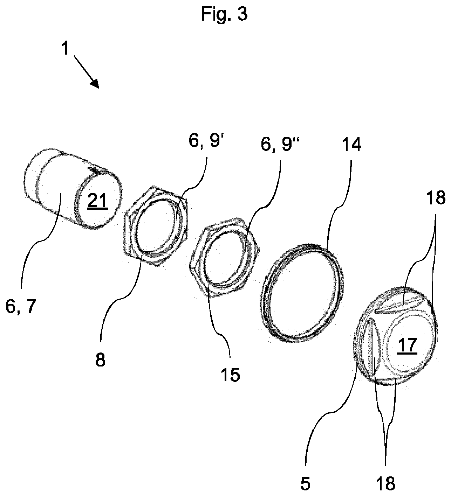

**Fig. 3** zeigt eine perspektivische Explosionsansicht der Sensoreinheit 1, wobei die Außenfläche 17 der Sensoreinheit 1 zwei um 90° zueinander versetzte Paare aus Schlüsselflächen 18 aufweist, wobei die Schlüsselflächen 18 eines Paares jeweils einander gegenüberliegen. Die Schlüsselflächen 18 sind durch Radien r bzw. durch stumpfe Kanten begrenzt. Die erste und zweite Überwurfmutter 8, 15 weisen ein identisches Innengewinde 9', 9" auf, welches jeweils für eine kraftschlüssige Verbindung mit dem Außengewinde 7 der Sensoreinheit 1 ausgebildet ist und ein Teil der Verbindungseinrichtung 6 bilden. Die Sensoreinheit 1 weist von seiner Stirnfläche 21 aus ein durchgehendes Außengewinde 7 auf. Die Axialdichtung 14 ist derart an der Außenfläche 17 der Hygieneabdeckung 5 angeordnet, dass diese radial miteinander abschließen und somit keine scharfen Kanten und oder Konturen entstehen, die potentiell die Reinigung erschweren bzw. schmutzanhaftend sind. Die Hygieneabdeckung 5 hat im Wesentlichen die Form eines axial zweistufigen Zylinders.

### BEZUGSZEICHENLISTE

- 1: Sensoreinheit
- 2: Anlagenwandung
- 3: Hygienebereich
- 4: Durchtrittsende
- 5: Hygieneabdeckung
- 6: Verbindungseinrichtung
- 7: Außengewinde
- 8: Erste Überwurfmutter
- 9, 9', 9": Innengewinde
- 10: Abdeckungsinnenraum
- 11: Stirnwandung
- 12: Umfangswandung
- 13: Verbindungsfläche
- 14: Axialdichtung
- 15: Zweite Überwurfmutter
- 16: Abdeckungsabschnitt
- 17: Außenfläche
- 18: Schlüsselfläche
- 19: Durchgangsöffnung
- 20: Installationsbereich
- 21: Stirnfläche
- 22: Dichtungsnase
- 23: Mutterstirnfläche
- 24: Sensorgehäuse
- 25: Sensoreinheitsachse
- d: Dicke
- r: Radius
- a: Abstand
- I: Luftspalt

## Patentansprüche

1. Sensoreinheit (1) zur durchsetzenden Verbindung mit einer Anlagenwandung (2) einer hygienekritischen technischen Anlage aufweisend ein im Wesentlichen zylinderförmiges Sensorgehäuse (24) mit einem im Benutzungsfall innerhalb eines Hygienebereichs (3) der technischen Anlage befindlichen Durchtrittsende (4) und einem Außengewinde (7), weiter aufweisend eine Hygieneabdeckung (5) für das Durchtrittsende (4) sowie eine Verbindungseinrichtung (6) zur kraftschlüssigen Verbindung zwischen Hygieneabdeckung (5) und Anlagenwandung (2), wobei die Verbindungseinrichtung (6) neben dem Außengewinde (7) an dem Sensorgehäuse (24) der Sensoreinheit (1), wenigstens eine erste Überwurfmutter (8) umfasst, wobei in einem Installationsbereich (20) die erste Überwurfmutter (8) auf dem Sensorgehäuse (24) aufgeschraubt ist, wobei die Anlagenwandung (2) den Hygienebereich (3) von dem Installationsbereich (20) trennt, und ein Innengewinde (9) an einem Abdeckungsinnenraum (10) der Hygieneabdeckung (5) umfasst, wobei das Innengewinde (9) zum Außengewinde (7) des Sensorgehäuses (24) korrespondiert, wobei der Abdeckungsinnenraum (10) durch eine flächengeschlossene, kreisrunde Stirnwandung (11) und eine, sich davon axial erstreckende, geschlossene Umfangswandung (12) ausgebildet ist, wobei die Umfangswandung (12) an ihrem von der Stirnwandung (11) axial gegenüberliegenden Ende eine Verbindungsfläche (13) mit einer Axialdichtung (14) zur Anlage an die Anlagenwandung (2) aufweist.

2. Sensoreinheit (1) nach Anspruch 1, **dadurch gekennzeichnet , dass** die Verbindungseinrichtung (6) eine zweite Überwurfmutter (15) aufweist und die Hygieneabdeckung (5) einen axial erstreckten Abdeckungsabschnitt (16) mit einem vergrößerten Radius zur Aufnahme der zweiten Überwurfmutter (15) in dem Abdeckungsinnenraum (10) aufweist.

3. Sensoreinheit (1) nach Anspruch 1 oder 2, **dadurch gekennzeichnet, dass** die axiale Erstreckung des Abdeckungsinnenraums (10) größer als diejenige des Durchtrittendes (4) ist.

4. Sensoreinheit (1) nach Anspruch 1, 2 oder 3, **dadurch gekennzeichnet, dass** die Stirnwandung (11) eine Dicke (d) von maximal 5 mm, bevorzugt von maximal 3 mm, besonders bevorzugt von maximal 1 mm aufweist.

5. Sensoreinheit (1) nach einem der vorhergehenden Ansprüche, **dadurch gekennzeichnet, dass** eine durch die Stirnwandung (11) und die Umfangswandung (12) gebildete Außenfläche (17) keine scharfen Kanten, insbesondere ausschließlich Radien (r) aufweist und/oder die Außenfläche (17) eine radial mindestens einstufig ausgebildete Zylinderform und/oder eine mindestens teilweise ausgebildete Schlüsselfläche (18) aufweist.

6. Sensoreinheit (1) nach Anspruch 5, **dadurch gekennzeichnet, dass** die Außenfläche (17) aus einem hochlegierten Stahl, insbesondere einem Edelstahl, gefertigt ist.

## Claims

1. Sensor unit (1) for connecting, in a penetrating manner, to an installation wall (2) of a hygiene-critical technical installation, comprising a substantially cylindrical sensor housing (24) having a passage end (4) which, when in use, is located within a hygiene region (3) of the technical installation, and having an external thread (7), the sensor unit further comprising a hygiene cover (5) for the passage end (4) and a connecting device (6) for force-fitting connection between the hygiene cover (5) and the installation wall (2), wherein the connecting device (6) comprises, in addition to the external thread (7) on the sensor housing (24) of the sensor unit (1), at least one first union nut (8), wherein in an installing region (20), the first union nut (8) is screwed onto the sensor housing (24), wherein the installation wall (2) separates the hygiene region (3) from the installing region (20), and the connecting device further comprises an internal thread (9) on a cover interior (10) of the hygiene cover (5), wherein the internal thread (9) corresponds to the external thread (7) of the sensor housing (24), wherein the cover interior (10) is formed by a closed-surface, circular end wall (11) and a closed circumferential wall (12) extending axially therefrom, wherein the circumferential wall (12) has, at its end axially opposite the end wall (11), a connecting surface (13) which has an axial seal (14) for abutting the installation wall (2).

2. Sensor unit (1) according to claim 1, **characterized in that** the connecting device (6) has a second union nut (15), and the hygiene cover (5) has an axially extended cover portion (16) which has an enlarged radius for receiving the second union nut (15) in the cover interior (10).

3. Sensor unit (1) according to claim 1 or 2, **characterized in that** the axial extent of the cover interior (10) is greater than that of the passage end (4).

4. Sensor unit (1) according to claim 1, 2 or 3, **characterized in that** the end wall (11) has a thickness (d) of at most 5 mm, preferably of at most 3 mm, particularly preferably of at most 1 mm.

5. Sensor unit (1) according to any of the preceding claims,
**characterized in that** an outer surface (17) formed by the end wall (11) and the circumferential wall (12) has no sharp edges, in particular exclusively radii (r), and/or the outer surface (17) has a cylindrical shape with at least one radial stage and/or has an at least partially formed wrench flat (18).

6. Sensor unit (1) according to claim 5, **characterized in that** the outer surface (17) is made of a high-alloy steel, in particular a stainless steel.

## Revendications

1. Unité formant capteur (1) destinée à être reliée de manière traversante à une paroi d'installation (2) d'une installation technique à hygiène critique, présentant un boîtier de capteur (24) sensiblement cylindrique comportant une extrémité de passage (4) se trouvant, en cas d'utilisation, à l'intérieur d'une zone hygiénique (3) de l'installation technique et un filetage extérieur (7), présentant en outre un élément de recouvrement hygiénique (5) pour l'extrémité de passage (4) ainsi qu'un dispositif de liaison (6) pour la liaison par adhérence entre l'élément de recouvrement hygiénique (5) et la paroi d'installation (2), dans laquelle le dispositif de liaison (6) comprend, outre le filetage extérieur (7) sur le boîtier de capteur (24) de l'unité formant capteur (1), au moins un premier écrou-raccord (8), dans laquelle le premier écrou-raccord (8) est vissé sur le boîtier de capteur (24) dans une zone d'installation (20), dans laquelle la paroi d'installation (2) sépare la zone hygiénique (3) de la zone d'installation (20), et comprend un filetage intérieur (9) sur un espace intérieur d'élément de recouvrement (10) de l'élément de recouvrement hygiénique (5), dans laquelle le filetage intérieur (9) correspond au filetage extérieur (7) du boîtier de capteur (24), dans laquelle l'espace intérieur d'élément de recouvrement (10) est réalisé par une paroi frontale (11) circulaire à surface fermée et une paroi circonférentielle (12) fermée s'étendant axialement à partir de celle-ci, dans laquelle la paroi circonférentielle (12) présente, au niveau de son extrémité opposée axialement à la paroi frontale (11), une surface de liaison (13) comportant un joint d'étanchéité axial (14) pour l'appui sur la paroi d'installation (2).

2. Unité formant capteur (1) selon la revendication 1, **caractérisée en ce que** le dispositif de liaison (6) présente un second écrou-raccord (15) et l'élément de recouvrement hygiénique (5) présente une section de recouvrement (16) s'étendant axialement et comportant un rayon agrandi pour la réception du second écrou-raccord (15) dans l'espace intérieur d'élément de recouvrement (10).

3. Unité formant capteur (1) selon la revendication 1 ou 2,
**caractérisée en ce que** l'extension axiale de l'espace intérieur d'élément de recouvrement (10) est supérieure à celle de l'extrémité de passage (4).

4. Unité formant capteur (1) selon la revendication 1, 2 ou 3,
**caractérisée en ce que** la paroi frontale (11) présente une épaisseur (d) de 5 mm maximum, de préférence de 3 mm maximum, de manière particulièrement préférée de 1 mm maximum.

5. Unité formant capteur (1) selon l'une des revendications précédentes,
**caractérisée en ce qu'**une surface extérieure (17) formée par la paroi frontale (11) et la paroi circonférentielle (12) ne présente pas d'arêtes vives, en particulier exclusivement des rayons (r) et/ou la surface extérieure (17) présente une forme cylindrique réalisée radialement au moins en un seul étage et/ou une surface de clé (18) réalisée au moins partiellement.

6. Unité formant capteur (1) selon la revendication 5, **caractérisée en ce que** la surface extérieure (17) est fabriquée en un acier fortement allié, en particulier un acier inoxydable.
